# FASCICULE DE BREVET EUROPEEN

(11) **EP 0 608 646 B1**
(45) Date de publication et mention de la délivrance du brevet: **18.09.1996**
(21) Numéro de dépôt: 93402897.8
(22) Date de dépôt: 30.11.1993
(51) Int. Cl.: H01M 4/38

(54) **Matériau hydrurable pour électrode négative d'accumulateur nickel-hydrure**
Wasserstoffaufnehmender Werkstoff für negative Elektroden von Nickel-Hydrid Akkumulatoren
Hydridable material for nickel-hydride accumulator negative electrode

(30) Priorité: 04.12.1992 FR 9214662
(43) Date de publication de la demande: 03.08.1994
(73) Titulaire: SAFT, F-93230 Romainville (FR)
(72) Inventeur: Bouet, Jacques, F-75015 Paris (FR); Knosp, Bernard, F-92200 Neuilly-Sur-Seine (FR); Percheron-Guegan, Annick, c/o C.N.R.S., F-92195 Meudon Cedex (FR); Cocciantelli, Jean-Michel, F-33000 Bordeaux (FR)
(74) Mandataire: Laroche, Danièle

(56) Documents cités:
- EP-A- 0 284 333
- JP-A- 2 186 559
- JP-A- 4 210 440
- JP-A-62 020 245
- JP-A-62 043 063
- US-A- 5 108 851
- PATENT ABSTRACTS OF JAPAN vol. 11, no. 224 (E-525) (2671) 21 Juillet 1987 & JP-A-62 043 064 (MATSUSHITA ELECTRIC IND CO LTD) 25 Février 1987
- CHEMICAL ABSTRACTS, vol. 118, no. 22, 31 Mai 1993, Columbus, Ohio, US; abstract no. 216590v, LI, YUFENG 'Hydrogen-absorbing alloys for battery anodes'

## Description

Cette invention concerne un matériau hydrurable pour électrode négative d'accumulateur nickel-hydrure.

Pour certains secteurs d'application, les accumulateurs nickel-cadmium sont en voie d'être remplacés par des accumulateurs nickel-hydrure. Les accumulateurs nickel-hydrure étanches sont des accumulateurs alcalins à électrolyte aqueux; le réactif constitué par l'hydrogène est stocké dans la masse de l'alliage hydrurable qui a la faculté de pouvoir en absorber de grandes quantités. Cet alliage doit pouvoir emmagasiner et restituer l'hydrogène, selon que l'accumulateur est en charge ou en décharge, avec une vitesse suffisante dans les conditions normales de fonctionnement. Il doit également avoir une capacité électrochimique plus élevée que le cadmium, résister à la corrosion dans la potasse, et ne pas être toxique.

A l'heure actuelle, on utilise principalement des alliages hydrurables de type AB₅, dérivant de LaNi₅. Le composé LaNi₅ présente une capacité d'absorption d'hydrogène réversible par voie solide-gaz équivalente à 370mAh/g. Toutefois sa pression de plateau, qui est de l'ordre de 2 bars, est trop élevée pour une utilisation dans une électrode négative d'accumulateur, pour laquelle la pression de plateau doit être comprise entre 0,01 bar et 1 bar. De plus la résistance à la corrosion de cet alliage dans la potasse concentrée est insuffisante.

Afin d'abaisser la coût des alliages de type LaNi₅, le lanthane est généralement remplacé par du mischmetall, désigné par Mm, dont la composition typique est: La_{0,25 à 0, 35} Ce_{0,45 à 0,55} Nd_{0,10 à 0,20} Pr_{0,03 à 0,07}

D'autre part, la substitution partielle du nickel par de l'aluminium et du manganèse permet d'abaisser la pression de plateau; tandis que la substitution partielle du nickel par le cobalt permet d'améliorer la résistance à la corrosion de cet alliage.

Un alliage de type MmB₅, à base de mischmetall Mm et répondant à la formule MmNi₃,₅Mn₀,₅Al₀,₃Co_{0,7}, est décrit dans la demande de brevet japonais JP-61 233 969. Un accumulateur, mettant en oeuvre une électrode dont l'alliage a la composition précédente, ne présente pas la capacité que l'on pourrait attendre.

La présente invention a pour but l'obtention d'un matériau hydrurable de capacité massique élevée, destiné à être utilisé dans l'électrode négative d'un accumulateur nickel-hydrure.

L'objet de la présente invention est un matériau hydrurable de type AB₅ pour électrode négative d'accumulateur nickel-hydrure dérivé du composé MmNi₅, Mm étant le mischmetall, où le nickel est partiellement substitué par du manganèse, de l'aluminium, et du cobalt, caractérisé par le fait que le terme A a pour formule générale: La_{(1-x-y-z)} Ceₓ Nd_{y} Pr_{z},
avec 0≤x≤0,784, 0,15≤z≤1, 0,1≤x+z, 0<y+z, x+y+z≤1, et 0≤y≤0,205-1,17x+2,39x²-1,57x³-z(0,23-0,65x+1,18x²)+z²(0,18-0,54x)

Par rapport à un mischmetall Mm naturel, cette composition permet d'augmenter la capacité massique du matériau d'au moins 15mAh/g.

De préférence, selon une première variante de réalisation, dans ladite formule générale du terme A: 0 ≤x≤0,21 et 0 ≤y ≤ 2(0,21-x-0,4z+0,25z²)/3. Par rapport à l'art antérieur, cette composition permet d'augmenter la capacité massique du matériau d'au moins 25mAh/g.

Selon une seconde variante de réalisation particulièrement avantageuse, dans ladite formule générale du terme A: 0 ≤x≤0,12, 0 ≤y≤ 2(0,12-x-z/3)/3, et 0,15 ≤z≤ 0,36. Par rapport à l'art antérieur, cette composition permet d'augmenter la capacité massique du matériau d'au moins 40mAh/g.

Dans ledit matériau, le terme B₅ a pour formule générale: Niₐ Mn_{b} Al_{c} Co_{d}, avec 3,25 ≤ a ≤ 3,75, 0,25 ≤b ≤0,45, 0,25 ≤c ≤0,45, 0,65 ≤d ≤0,95, et 4,8 ≤ a+b+c+d ≤ 5,2. Cette formule a pour avantage d'abaisser la pression de plateau et d'améliorer la résistance à la corrosion dudit matériau.

Ledit matériau hydrurable est plus particulièrement destiné à être utilisé dans une électrode négative d'accumulateur nickel-hydrure réalisée à partir d'un mélange composé dudit matériau hydrurable en poudre, de 0,1 à 10% d'une poudre conductrice, et de 0,05 à 5% de liant organique, fixé sur un support conducteur. Mais sans sortir du cadre de l'invention, l'alliage peut également être mis en oeuvre pour réaliser une électrode, en incorporant ledit matériau à un support conducteur tridimensionnel, comme par exemple une mousse ou un feutre métallique, ou en le fixant sur un support bidimensionnel, comme un feuillard perforé ou une grille.

La présente invention a comme avantages de fournir des capacités massiques supérieures d'au moins 15mAh/g, et même supérieures de 40mAh/g, à celles que l'on obtient en utilisant du mischmetall Mm naturel. La présence de néodyme Nd contribue à un abaissement de la capacité, l'utilisation d'un alliage selon l'invention pauvre en néodyme Nd permet d'obtenir des capacités plus élevées. Par ailleurs, le néodyme est très utilisé dans l'industrie (aimants en terres rares par exemple), et il est intéressant du point de vue du coût de l'extraire de l'alliage naturel pour le valoriser indépendamment.

D'autres caractéristiques et avantages de la présente invention apparaitront au cours de la description, et à la lecture des exemples suivants de modes de réalisation donnés à titre illustratif mais nullement limitatif, et dans le dessin annexé.

Dans le dessin annexé:
- la figure 1 représente, dans un repère à trois dimensions, le domaine de composition du matériau selon l'invention qui permet d'obtenir des capacités supérieures d'au moins 15mAh/g par rapport à un matériau basé sur le mischmetall Mm naturel,
- la figure 2, analogue à la figure 1, montre une première variante de composition pour un gain de capacité supérieure à 25mAh/g,
- la figure 3, analogue à la figure 1, montre une deuxième variante de composition pour un gain de capacité supérieure à 40mAh/g.

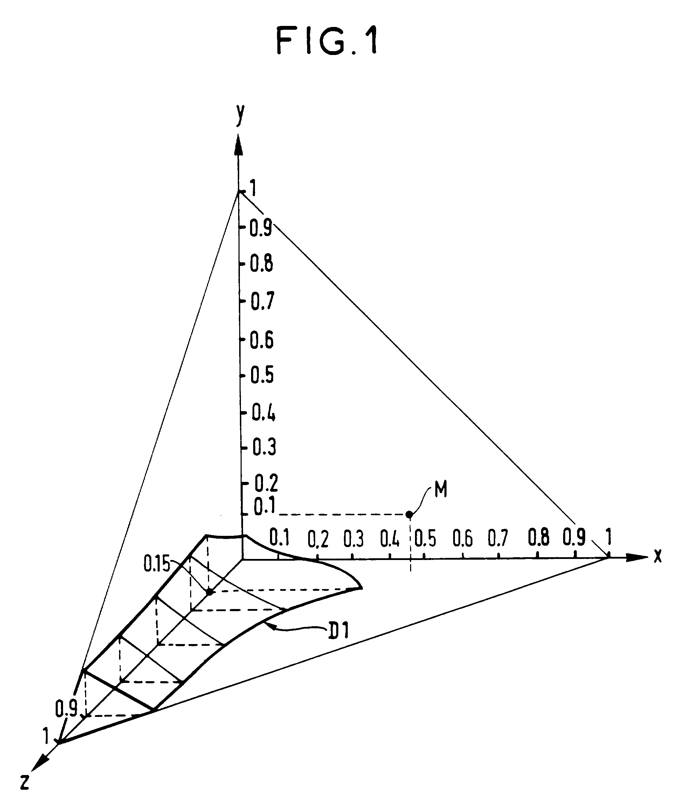

Sur les figures 1 à 3, le taux y de néodyme Nd est donné en ordonné, en abcisse le taux x de cérium Ce, et dans la troisième dimension le taux z en praséodyme Pr. Sur chaque figure, la composition M du mischmetall Mm est rappelée.

La figure 1 montre un domaine de composition D1 du matériau selon l'invention permettant d'atteindre au moins 275mAh/g. Dans ce domaine, A est défini par: La_{(1-x-y-z)} Ceₓ Nd_{y} Pr_{z}, où 0 ≤ x ≤ 0,784, 0,15 ≤ z ≤ 1, et 0≤y≤0,205-1,17x+2,39x²-1,57x³-z(0,23-0,65x+1,18x²)+z²(0,18-0,54x)

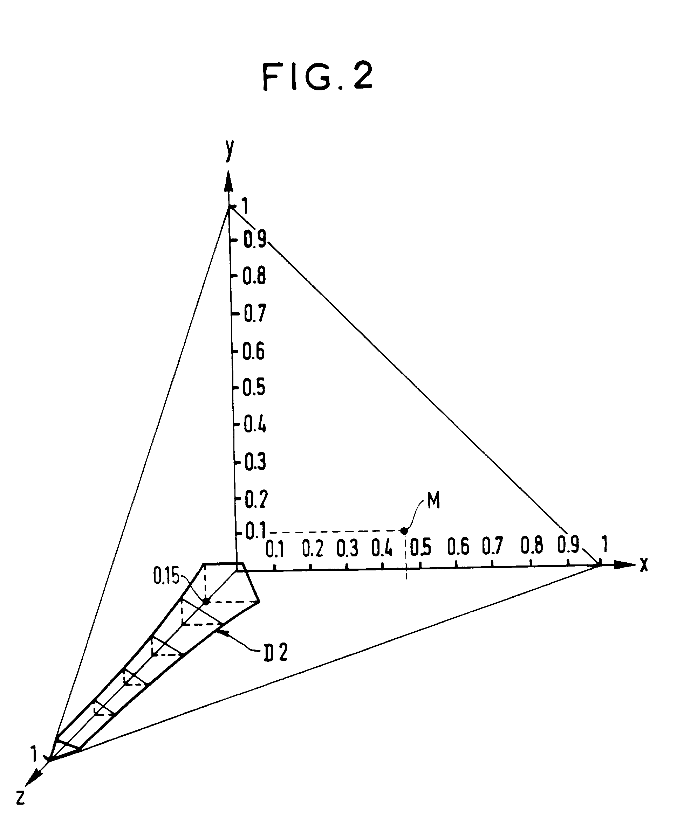

La figure 2 montre un domaine de composition D2 du matériau selon l'invention permettant d'obtenir des capacités supérieures à 285mAh/g. Dans ce domaine, A est défini par La_{(1-x-y-z)} Ceₓ Nd_{y} Pr_{z}, où 0 ≤ x ≤ 0,21, 0,15 ≤ z ≤ 1, et 0 ≤ y ≤ 2(0,21-x-0,4z+0,25z²)/3.

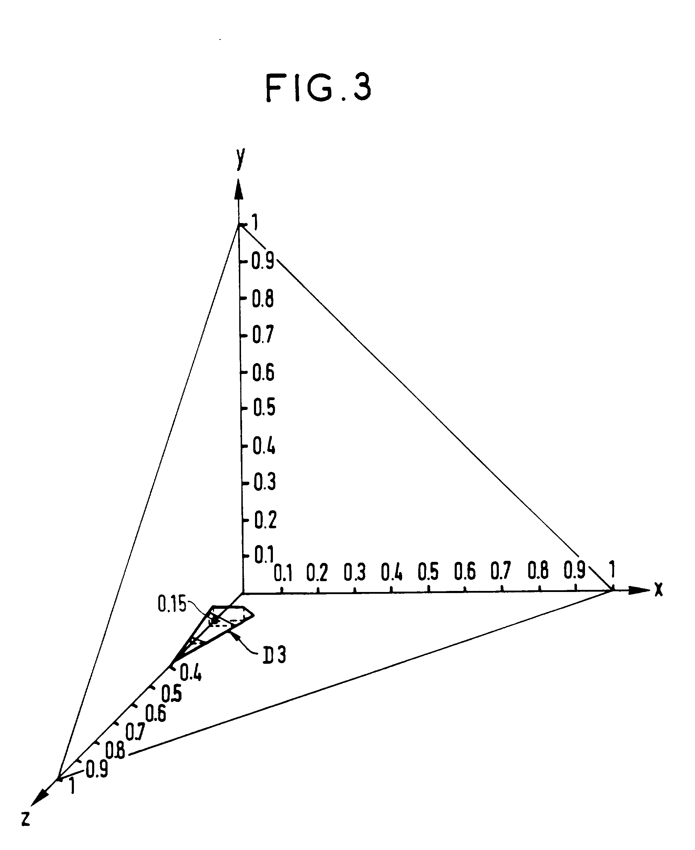

Sur la figure 3 est également représentée la limite d'un domaine D3 dans lequel la capacité est au moins de 300mAh/g. Dans ce domaine, A est défini par La_{(1-x-y-z)} Ceₓ Nd_{y} Pr_{z}, où 0 ≤ x ≤,12, 0,15 ≤ z ≤ 0,36, et 0 ≤ y ≤ 2(0,12-x-z/3)/3.

### EXEMPLE 1 Art antérieur

On a réalisé une électrode à partir d'un matériau hydrurable de type AB₅ basé sur le mischmetall Mm naturel. Dans ce cas, A est La_{0,3} Ce_{0,49} Nd_{0,16} Pr_{0,05} et B₅ est Ni_{3,55} Mn_{0,30} Al_{0,40} Co_{0,75}. Sur les figures 1 à 3, la composition de cet alliage est représentée par le point M.

L'alliage est réduit en poudre (taille de particules: Ø moyen = 22µm) par broyage mécanique en atmosphère inerte (argon), ou par cyclage d'hydruration solide-gaz. L'électrode se compose de 90% d'alliage en poudre, de 5% d'une poudre conductrice de carbone, et de 5% de liant organique à base de PTFE, supporté par un collecteur de courant en déployé de nickel.

L'électrode négative ainsi obtenue est montée dans une cellule de test étanche face à une contre-électrode de nickel; un séparateur non tissé se trouve entre les deux électrodes; l'électrolyte est de la potasse KOH 8,7N. Le protocole de test est le suivant:
- charge 16 heures à C/10 (régime correspondant à la charge de la capacité C en 10 heures),
- décharge à C/5 jusqu'à une tension d'arrêt de 0,9 Volt, suivie d'une décharge résiduelle à C/10 jusqu'à 0,9 Volt.

La capacité totale restituée au troisième cycle est de 261mAh/g.

### EXEMPLE 2 Art antérieur

Comme dans l'exemple 1, on a réalisé une électrode à partir du mischmetall Mm naturel à l'exception de la taille de particules: Ø moyen compris entre 40 et 45µm.

L'électrode négative ainsi obtenue est montée dans une cellule de test analogue à celle décrite dans l'exemple 1 et testée selon le protocole suivant.

Trois premiers cycles:
- charge 16 heures à C/10,
- décharge à C/5 jusqu'à une tension d'arrêt de 1 Volt,
- décharge résiduelle à C/10 jusqu'à 1 Volt.

La capacité totale restituée au troisième cycle à un régime de C/5 est de 311mAh/g.

Quatrième cycle:
- charge 16 heures à C/10,
- décharge à C jusqu'à une tension d'arrêt de 1 Volt.

La capacité restituée au quatrième cycle à un régime de C est de 218mAh/g, soit une perte de 30% par rapport au régime C/5.

Cinquième cycle:
- décharge résiduelle à C/10 jusqu'à 1 Volt.
- charge 1 heure et 20 minutes à C,
- décharge à 2C jusqu'à une tension d'arrêt de 1 Volt.

La capacité restituée au cinquième cycle à un régime de 2C est de 126mAh/g, soit une perte de 59% par rapport au régime C/5.

### EXEMPLE 3

De la même manière que décrit dans l'exemple 1, une électrode est réalisée à partir de la poudre (17≤⌀moyen≤29µm) d'un alliage du type AB₅ dont A correspond à la formule La_{0,30} Ce_{0,03} Nd_{0,02} Pr_{0,65}, et B₅ est identique à l'exemple 1. Cette composition est représentée par le domaine D1 de la figure 1.

Cette électrode est cyclée dans les mêmes conditions que dans l'exemple 1. Au troisième cycle, on obtient une capacité massique de 284mAh/g, correspondant à un gain de 22mAh/g par rapport à l'art antérieur.

### EXEMPLE 4

De la même manière que décrit dans l'exemple 2, une électrode est réalisée à partir de la poudre de l'alliage de l'exemple 3, puis testée dans les conditions décrites dans l'exemple 2.

La capacité totale déchargée au troisième cycle à un régime de C/5 est de 313mAh/g. Lors de la décharge à un régime de C, la perte de capacité est de 26%. Cette perte n'est que de 55% à un régime de 2C.

### EXEMPLE 5

De la même manière que décrit dans l'exemple 1, une électrode est réalisée à partir de la poudre d'un alliage du type AB₅ de granulométrie: 17≤Ømoyen≤29µm, dont A correspond à la formule La_{0,50} Ce_{0,05} Nd_{0,02} Pr_{0,43}, et B₅ est identique à l'exemple 1. Cette composition est représentée par le domaine D2 sur la figure 2.

Cette électrode est cyclée dans les mêmes conditions que dans l'exemple 1. Au troisième cycle, on obtient une capacité massique de 289mAh/g, correspondant à un gain de 29mAh/g par rapport à l'art antérieur.

### EXEMPLE 6

De la même manière que décrit dans l'exemple 2, une électrode est réalisée à partir de la poudre de l'alliage de l'exemple 5, puis testée dans les conditions décrites dans l'exemple 2.

La capacité totale déchargée au troisième cycle à un régime de C/5 est de 319mAh/g. Lors de la décharge à un régime de C, la perte de capacité est de 28%. Cette perte n'est que de 54% à un régime de 2C.

### EXEMPLE 7

De la même manière que décrit dans l'exemple 1, une électrode est réalisée à partir de la poudre d'un alliage du type AB₅ de granulométrie: 17≤φmoyen≤29µm, dont A correspond à la formule La_{0,20} Pr_{0,80}, et B₅ est identique à l'exemple 1. Cette composition appartient au domaine D2 représenté sur la figure 2.

Cette électrode est cyclée dans les mêmes conditions que dans l'exemple 1. Au troisième cycle, on obtient une capacité massique de 289mAh/g, correspondant à un gain de 27mAh/g par rapport à l'art antérieur.

### EXEMPLE 8

De la même manière que décrit dans l'exemple 2, une électrode est réalisée à partir de la poudre de l'alliage de l'exemple 7, puis testée dans les conditions décrites dans l'exemple 2.

La capacité totale déchargée au troisième cycle à un régime de C/5 est de 328mAh/g. Lors de la décharge à un régime de C, la perte de capacité est de 29%. Cette perte n'est que de 57% à un régime de 2C.

### EXEMPLE 9

De la même manière que décrit dans l'exemple 1, une électrode est réalisée à partir de la poudre d'un alliage du type AB₅ de granulométrie: 17≤Ømoyen≤29µm, dont A correspond à la formule La_{0,70} Pr_{0,30}, et B₅ est identique à l'exemple 1. Cette composition est représentée par le domaine D3 de la figure 3.

Cette électrode est cyclée dans les mêmes conditions que dans l'exemple 1. Au troisième cycle, on obtient une capacité massique de 304mAh/g, correspondant à un gain de 43mAh/g par rapport à l'art antérieur.

### EXEMPLE 10

De la même manière que décrit dans l'exemple 1, une électrode est réalisée à partir de la poudre d'un alliage du type AB5 de granulométrie: 17≤Ømoyen≤29µm, dont A est Pr, et B₅ est identique à l'exemple 2. Cette composition est représentée sur la figure 2 par le domaine D2.

Cette électrode est cyclée dans les mêmes conditions que dans l'exemple 1. Au troisième cycle, on obtient une capacité massique de 293mAh/g, correspondant à un gain de 32mAh/g par rapport à l'art antérieur.

### EXEMPLE 11

De la même manière que décrit dans l'exemple 1, une électrode est réalisée à partir de l'alliage de l'exemple 10 mais de granulométrie: Ømoyen = 35µm.

Cette électrode est cyclée durant 1000 cycles dans les conditions suivantes:
- charge pendant 63 minutes à C,
- décharge à C jusqu'à une tension d'arrêt de 1 Volt.

Tous les 50 cycles, on effectue une décharge à C/5 jusqu'à 1V afin de contrôler l'évolution de la capacité.

La perte de capacité constatée après 1000 cycles lors d'une décharge à C/5 n'est que de 23% de la capacité initiale.

Bien entendu la présente invention n'est pas limitée aux modes de réalisation décrits, mais on pourra sans sortir du cadre de l'invention faire varier les taux des divers composants de l'alliage dans les fourchettes indiquées.

## Revendications

1. Matériau hydrurable de type AB₅ pour électrode négative d'accumulateur nickel-hydrure dérivé du composé MmNi₅, Mm étant le mischmetall, où le nickel est partiellement substitué par du manganèse, de l'aluminium, et du cobalt, caractérisé par le fait que le terme A a pour formule générale: La_{(1-x-y-z)} Ceₓ Nd_{y} Pr_{z},
avec 0≤x≤0,784, 0,15≤z≤1, 0,1≤x+z, 0<y+z, x+y+z≤1, et 0≤y≤0,205-1,17x+2,39x²-2,57x³-z(0,23-0,65x+1,18x²)+z²(0,18-0,54x)

2. Matériau selon la revendication 1, caractérisé en ce que dans ladite formule générale du terme A: 0 ≤x ≤ 0,21 et 0 ≤y ≤ 2(0,21-x-0,4z+0,25z²)/3.

3. Matériau selon l'une des revendications 1 et 2, caractérisé en ce que dans ladite formule générale du terme A: 0 ≤ x ≤ 0,12, 0 ≤ y ≤ 2(0,12-x-z/3)/3, et 0,15 ≤ z ≤ 0,36.

4. Matériau selon l'une des revendications précédentes, caractérisé par le fait que le terme B₅ a pour formule générale: Niₐ Mn_{b} Al_{c} Co_{d}, avec 3,25 ≤ a ≤ 3,75, 0,25 ≤ b ≤ 0,45, 0,25 ≤ c ≤ 0,45, 0,65 ≤ d ≤ 0,95, et 4,8 ≤ a+b+c+d ≤ 5,2.

5. Electrode négative d'accumulateur nickel-hydrure comportant un matériau hydrurable selon l'une des revendications précédentes caractérisée en ce qu'elle est réalisée à partir d'un mélange composé dudit matériau hydrurable en poudre, de 0,1 à 10% d'une poudre conductrice, et de 0,05 à 5% de liant organique, fixé sur un support conducteur.

## Patentansprüche

1. Hydrierbares Material vom Typ AB₅ für die negative Elektrode eines Akkumulators vom Typ Nickel-Hydrid, abgeleitet von der Verbindung MmNi₅, wobei Mm das Mischmetall ist, in dem das Nickel teilweise durch Mangan, Aluminium und Kobalt substituiert ist, dadurch gekennzeichnet, daß der Stoff A die allgemeine Formel hat: La_{(1-x-y-z)} Ceₓ Nd_{y} Pr_{z}, wobei gilt:
0 ≤ x ≤ 0,784; 0,15 ≤ z ≤ 1; 0,1 ≤x+z; 0<y+z; x+y+z≤1 und 0 ≤ y ≤ 0,205-1,17x+2,39x²-1,57x³-z(0,23-0,65x+1,18x²) +z²(0,18-0,54x).

2. Material nach Anspruch 1, dadurch gekennzeichnet, daß in der allgemeinen Formel für den Stoff A gilt: 0 ≤ x ≤ 0,21 und 0 ≤ y ≤ 2(0,21-x-0,4z+0,25z²)/3.

3. Material nach einem der Ansprüche 1 und 2, dadurch gekennzeichnet, daß in der allgemeinen Formel für den Stoff A gilt: 0 ≤ x ≤ 0,12; 0 ≤ y ≤ 2(0,12-x-z/3)/3 und 0,15 ≤ z ≤ 0,36.

4. Material nach einem der vorhergehenden Ansprüche, dadurch gekennzeichnet, daß für den Stoff B₅ die allgemeine Formel gilt NiₐMn_{b}Al_{c}Co_{d} mit: 3,25 ≤ a ≤ 3,75; 0,25 ≤ b ≤ 0,45; 0,25 ≤ c ≤ 0,45; 0,65 ≤ d ≤ 0,95 und 4,8 ≤ a+b+c+d ≤ 5,2.

5. Negative Elektrode eines Nickel-Hydrid-Akkumulators mit einem hydrierbaren Material nach einem der vorhergehenden Ansprüche, dadurch gekennzeichnet, daß sie aus einer Mischung des pulverförmigen hydrierbaren Materials mit 0,1 bis 10% eines leitenden Pulvers und 0,05 bis 5% eines organischen Binders gebildet wird, die auf einem Träger befestigt ist.

## Claims

1. A hydridable material of the AB₅ type for the negative electrode of a nickel-hydride storage cell, the material being derived from the compound MwNi₅, Mm being misch metal, where the nickel is partially substituted by manganese, aluminum, and cobalt, said material being characterized by the fact that the general formula for the term A is as follows:
La_{(1-x-y-z)}CeₓNd_{y}Pr_{z}, where:
0 ≤ x ≤ 0.784,
0.15 ≤ z ≤ 1,
0.1 ≤ x+z,
0 < y+z,
x+y+z ≤ 1, and
0 ≤ y ≤ 0.205-1.17x+2.39x²-1.57x³-z(0.23-0.65x+1,18x²)+z²(0.18-0.54x).

2. A material according to claim 1, characterized in that, in said general formula for the term A: 0 ≤ x ≤ 0.21, and
0 ≤ y ≤ 2(0.21-x-0.4z+0.25z²)/3.

3. A material according to claim 1 or 2, characterized in that, in said general formula for the term A: 0 ≤ x ≤ 0.12,
0 ≤ y ≤ 2(0.12-x-z/3)/3, and 0.15 ≤ z ≤ 0.36.

4. A material according to any preceding claim, characterized by the fact that the general formula for the term B₅ is as follows:
NiₐMn_{b}Al_{c}Co_{d}, where 3.25 ≤ a ≤ 3.75, 0.25 ≤ b ≤ 0.45, 0.25 ≤ c ≤ 0.45, 0.65 ≤ d ≤ 0.95, and 4.8 ≤ a+b+c+d ≤ 5.2.

5. A negative electrode for a nickel-hydride storage cell, the electrode including a hydridable material according to any preceding claim, said electrode being characterized in that it is made from a mixture composed of said hydridable material in powder form, of 0.1% to 10% of a conductive powder, and of 0.05$ to 5% of organic binder, the mixture being fixed on a conductive support.
